# EUROPEAN PATENT APPLICATION

(11) **EP 4 170 877 A1**
(43) Date of publication of application: **26.04.2023**
(21) Application number: 21826317.6
(22) Date of filing: 12.05.2021
(51) Int. Cl.: H02K 17/16, H02K 17/18

(54) **ROTARY ELECTRICAL MACHINE**

(30) Priority: 18.06.2020 JP 2020105248
(71) Applicant: KABUSHIKI KAISHA TOSHIBA, Minato-ku Tokyo 105-0023 (JP); Toshiba Infrastructure Systems & Solutions Corporation, Kawasaki-shi, Kanagawa 212-0013 (JP)
(72) Inventor: MISU, Daisuke, Kawasaki-shi, Kanagawa (JP); TAKEUCHI, Katsutoku, Kawasaki-shi, Kanagawa (JP); MATSUSHITA, Makoto, Kawasaki-shi, Kanagawa (JP); HASEBE, Toshio, Kawasaki-shi, Kanagawa (JP)
(74) Representative: AWA Sweden AB
(86) International application number: PCT/JP2021/018043
(87) International publication number: WO 2021/256125

(57) **Abstract**

According to the present invention, a stator has stator slots and stator teeth. A rotor has rotor slots, rotor teeth, and rotor slot tips projecting in a circumferential direction from the ends in the circumferential direction of the rotor teeth by a prescribed length in a radial direction. The relationship of Nss ≥ Nrs is satisfied, where Nss represents the number of stator slots, and Nrs represents the number of rotor slots. The relationships of Tst ≤ Trt and (Wst - Wrs) + 2 × Dtip ≥ Wst are satisfied, where Wst represents the minimum widths of the stator teeth in the circumferential direction, Wrt represents the average width of the rotor teeth between rotor bars in the circumferential direction, Wrs represents the average width of the rotor slots in the circumferential direction, Tst represents a total of the minimum widths Wst of all the stator teeth, and Dtip represents the length of each of the rotor slot tips in the radial direction.

## Description

### Technical Field

Embodiments described herein relate generally to a rotary electric machine.

### Background Art

As an induction motor, a cage-type rotary electric machine using the so-called cage rotor is known. The cage-type rotary electric machine is constituted by a stator in which stator coils are arranged in a substantially cylindrical stator iron core having a plurality of stator slots, and a rotor provided on a radial inner side of the stator so as to be rotatable with respect to the stator.

The rotor includes a rotary shaft freely rotatable around the axis of rotation and a rotor iron core externally fixed to the rotary shaft. In the rotor iron core, a plurality of rotor teeth extending along the radial direction are arranged radially, and rotor slots are formed between adjacent rotor teeth in the circumferential direction, respectively. Into each of the rotor slots, a conductor bar is inserted. The conductor bars are connected to each other and shortcircuited by a shorting ring at the axial end portion of the rotor iron core.

Under this configuration, when current is supplied to the stator coil, an induced current is generated in the conductor bar (secondary conductor) by the magnetic flux generated on the primary (stator) side of the rotating machine. Thus, a rotational torque is given to the rotor.

Generally, there are magnetic irregularities between the rotor and stator due to the presence of stator slots and rotor slots. Therefore, due to these irregularities, the conductor bar is subject to spatial harmonic magnetic flux interlinkage in addition to the fundamental magnetic flux on the primary side. The current induced in the conductor bar by this harmonic flux does not contribute to the torque, but causes a loss (harmonic secondary copper loss) as a drawback.

### Citation List

### Patent Literatures

Patent Literature 1: JP 2704666 B
Patent Literature 2: WO 2017/090159
Patent Literature 3: JP 2016-174507 A

### Summary of Invention

### Technical Problem

An object of embodiments described herein is to provide a rotary electric machine which can suppress harmonic secondary copper loss and efficiently contributing the induced current generated in the conductor bar to torque.

### Solution to Problem

A rotary electric machine according to an embodiment, comprises a stator and a rotor. The stator includes a plurality of stator slots opened in an inner circumference surface and a plurality of stator teeth each formed between adjacent ones of the stator slots, around which a coil is wound. The rotor is provided freely rotatable about a central axis, and includes a plurality of rotor slots to which conductive rotor bars are inserted, a plurality of rotor teeth formed between respective adjacent ones of the rotor slots in a circumferential direction along an inner circumferential surface of the stator, and rotator slot tips projecting in the circumferential direction over a predetermined length in a radial direction from end portions of the rotor teeth along the circumferential direction. When the number of stator slots is represented by Nss and the number of rotor slots is represented by Nrs, a relationship of Nss ≥ Nrs is satisfied. Further, when a minimum width of the stator teeth in the circumferential direction is represented by Wst, an average width of the rotor teeth in the circumferential direction, interposed between the respective rotor bars is represented by Wrt, an average width of the rotor slots in the circumferential direction is represented by Wrs, a total sum of the minimum widths Wst of all the stator teeth is represented by Tst, a total sum of the average widths Wrt of all the rotor teeth is represented by Trt and a length of the rotor slot tips in the radial direction is represented by Dtip, relationships of Tst ≤ Trt and (Wst - Wrs) + 2 × Dtip ≥ Wst are satisfied.

### Brief Description of Drawings

FIG. 1 is a longitudinal cross-sectional view schematically showing a part of a configuration of a rotary electric machine according to the first embodiment.
FIG. 2 is a cross-sectional view schematically showing a part of each of a stator and a rotor of the rotary electric machine, taken along line A-A in FIG. 1.
FIG. 3 is a partially enlarged cross-sectional view of what is shown in FIG. 2.
FIG. 4 is a cross-sectional view schematically showing a part of each of a stator and a rotor in the second embodiment, taken along at a position corresponding to line A-A in FIG. 1.
FIG. 5 is a cross-sectional view schematically showing a part of each of a stator and a rotor in the third embodiment, taken along at a position corresponding to line A-A in FIG. 1.
FIG. 6 is a partially enlarged cross-sectional view schematically showing a stator and a rotor in the fourth embodiment, taken along at a position corresponding to line A-A in FIG. 1.
FIG. 7 is a partially enlarged cross-sectional view schematically showing a stator and a rotor according to a modified example of the fourth embodiment, taken along at a position corresponding to line A-A in FIG. 1.

### Mode for Carrying Out the Invention

The embodiments will be described below with reference to the drawings. The same symbols shall be attached to the common configurations throughout the embodiments, and redundant explanations shall be omitted. The figures are schematic diagrams to facilitate understanding of the embodiments and their shapes, dimensions, ratios, etc., may differ from those of the actual devices, but these may be redesigned as appropriate, taking into account the following description and known technology.

### (First Embodiment)

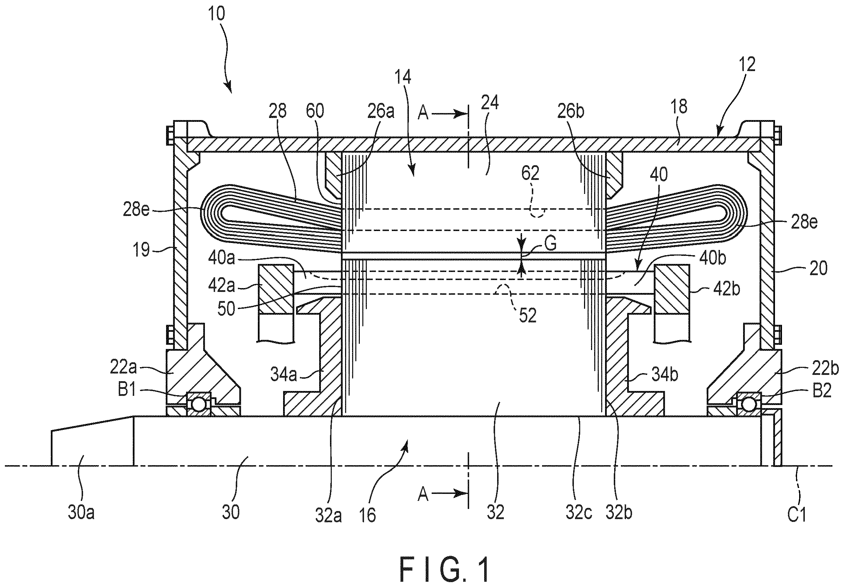

FIG. 1 is a longitudinal cross-sectional view of a rotary electric machine of an embodiment, schematically showing a part divided into halves along a central axis of the machine. In this embodiment, a case in which the rotary electric machine is applied to drive a railroad vehicle is assumed as an example. However, the application of the rotary electric machine is not limited to this and can be applied to other applications as well.

As shown in FIG. 1, the rotary electric machine 10 is configured, for example, as an inner rotor type rotary electric machine. The rotary electric machine 10 comprises an internally sealed case 12, a stator (stator) 14, and a cage-shaped rotor (rotor) 16, disposed inside the case 12. In the following descriptions, the direction along a central axis C1 along which the rotor 16 rotates in the rotary electric machine 10 is referred to as an axial direction, and a direction along which the rotor 16 rotates around the central axis is referred to as a circumferential direction (rotational direction). Further, a direction orthogonal to the axial and circumferential directions is defined as a radial direction, and in the radial direction, a side approaching the central axis C1 is defined as inside and a side moving away from the central axis C1 is defined as outside.

The case 12 includes a substantially cylindrical frame 18, a disk-shaped first bracket 19 attached to an axial one end of the frame 18 and closing this one end and a disk-shaped second bracket 20 attached to the other axial end of the frame 18 and closing this other end. At a central portion of the first bracket 19, a first bearing housing 22a with a built-in bearing B1 is bolted. At a central portion of the second bracket 20, a second bearing housing 22b with a built-in bearing B2 is bolted. The bearings B1 and B2 are arranged in alignment along the central axis C1 of the rotary motor machine 10.

The stator 14 includes a cylindrical stator iron core 24 and a stator coil 28 wound around the stator iron core 24. The stator iron core 24 is supported by the frame 18 while an outer circumferential surface thereof is engaged with an inner circumferential surface of the frame 18, and is arranged coaxially with the central axis C1. The stator iron core 24 is constituted by stacking a great number of annular metal plates made of a magnetic material, for example, silicon steel plate, one on another. A pair of annular iron core holders 26a and 26b are fixed to respective axial end surfaces of the stator iron core 24. The iron core holders 26a and 26b are formed in an annular shape from iron or the like and are used to hold the stator iron core 2 by sandwiching it therebetween from both axial ends to prevent the stator iron core 2 from separating. The inner diameters of the iron core holders 26a and 26b are set so that the inner circumferential portions thereof do not come into contact with the stator coil 28, which will be described later. The inner diameters of the iron core holders 26a and 26b are set so that the inner circumference does not come into contact with the stator coil 28, which will be described below. The stator iron core 24 and the iron core holders 26a and 26b are integrated into one body by, for example, welding or the like.

In the inner circumferential portion of the stator iron core 24, a plurality of stator teeth 60 protruding toward the central axis C1 are formed. The stator teeth 60 are arranged at equal intervals along the circumferential direction. Voids between circumferentially adjacent stator teeth 60 are each configured as a stator slot 62. In other words, each stator teeth 60 is formed between a respective circumferentially adjacent pair of stator slots 62. The stator slots 62 are opened in the stator 14, or plainly, the inner circumferential surface of the stator iron core 24. The stator teeth 60 and the stator slots 62 each extend along the axial direction. Via each stator slot 62, the respective stator coil 28 is wound around the respective stator tooth 60. The stator coils 28 are attached to the stator iron core 24 while being inserted to the stator slots 62, respectively. The coil ends 28e of the stator coils 28 protrude axially from both end surfaces of the stator iron core 24. To the stator coils 28, alternating current is supplied, which is converted thereto from direct current supplied from, for example, a string cable via a pantograph (both not shown).

The rotor 16 comprises a rotating shaft 30, a rotor iron core 32, a plurality of conductor bars (rotor bars) 40 embedded in the rotor iron core 32, and a pair of end rings 42 connected to respective ends of the respective conductor bar 40. The rotating shaft 30 is arranged in the case 12 coaxially with the central axis C1, and one axial end and the other axial end thereof are supported rotatably by the bearing B1 and B2, respectively. A drive end portion 30a of the rotating shaft 30 extends to the outside of the machine. To the drive end portion 30a, a joint for connecting a drive gear unit or the like is attached.

The rotor iron core 32 is constituted by stacking a number of annular metal plates made of a magnetic material, for example, silicon steel, one on another into a substantially cylindrical shape. The rotor iron core 32 is mounted in, approximately an axial central portion of the rotating shaft 30 and is disposed inside the stator iron core 24 and arranged coaxially with the central axis C1. An outer circumferential surface of the rotor iron core 32 opposes an inner circumferential surface of the stator iron core 24 with a gap G therebetween. The axial length of the rotor iron core 32 is approximately equal to the axial length of the stator iron core 24. Further, the rotor iron core 32 includes a first end surface 32a located at an axial one end thereof and a second end surface 32b located at the other axial end. The first end surface 32a and the second end surface 32b extended to be approximately orthogonal to the central axis C1. In a radial central portion of the rotor iron core 32, a through hole 32c is formed over an entire axial direction thereof, through which the rotating shaft 30 can be inserted. The rotor iron core 32 and the rotating shaft 30 are integrated into one body by press-fitting or bonding the rotating shaft 30 into the through hole 32c.

The rotor iron core 32 is supported by a pair of iron core holders 34a and 34b attached to the rotating shaft 30 such as to be sandwiched from both axial end sides thereof. The iron core holders 34a, 34b are formed into an annular shape and their outer diameters are less than that of the rotor iron core 32.

On an outer circumferential portion of the rotor iron core 32, a plurality of rotor teeth 50 are formed. The rotor teeth 50 are arranged at approximately equal intervals along the circumferential direction of the stator 14, or plainly, along the inner circumferential surface of the stator iron core 24. Voids between circumferentially adjacent rotor teeth 50 are each configured as a rotor slot 52. In other words, each rotor teeth 50 is formed between a respective circumferentially adjacent pair of rotor slots 52. The rotor slots 52 are arranged at approximately equal intervals along the circumferential direction. Each rotor tooth 50 extends in the axial direction. Further, each rotor slot 52 extends through the rotor iron core 32 along the axial direction and is opened to the first end surface 32a and the second end surface 32b.

The conductor bars 40 are each a bar-shaped member formed of, for example, an electrically conductive and nonmagnetic material (conductor) such as copper or aluminum. The conductor bars 40 are inserted to the rotor slots 52, respectively and each extend in the axial direction of the rotor iron core 32. The conductor bars 40 each has a cross-sectional shape which corresponds, for example, to a cross-sectional shape of the rotor slots 52 and is slightly smaller than and approximately similar to the cross-sectional shape. With this structure, while inserted to the rotor slots 52, a slight clearance exists between each conductor bar 40 and the respective rotor slot 52. The conductor bars 40 inserted to the respective rotor slots 52 are fixed to the rotor slots 52 by caulking or bonding, for example. One longitudinal end (first bar end) 40a of each conductor bar 40 extends outward from the first end surface 32a of the rotor iron core 32. The other longitudinal end (second bar end) 40b of the conductor bar 40 extends outward from the second end surface 32b of the rotor iron core 32. Extending lengths of the first bar end 40a and the second bar end 40b are set to be approximately equal to each other.

A circular end ring 42a is fixed to the extending end of the first bar end 40a. The end ring 42a is arranged coaxially with the central axis C1 and couples a plurality of bar ends 40a with each other. A circular end ring 42b is fixed to the extending end of the second bar end 40b. The end ring 42b is arranged coaxially with the central axis C1 and couples a plurality of bar ends 40b with each other. The conductor bars 40 and the end rings 42a and 42b are made of, for example, a conductive metal material such as aluminum or copper.

The conductor bars 40 and the pair of end rings 42a and 42b constitute a cage-shaped rotor of the rotary electric machine 10. By allowing current to flow in the stator coil 28, the rotor iron core 32 is induced to rotate and the rotating shaft 30 rotates together with the rotor iron core 32.

Next, the relationship between the stator teeth 60 and stator slots 62 and the rotor teeth 50 and rotor slots 52 in this embodiment will be explained.

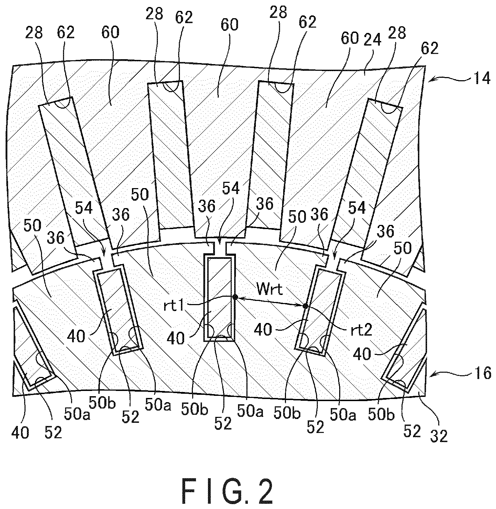

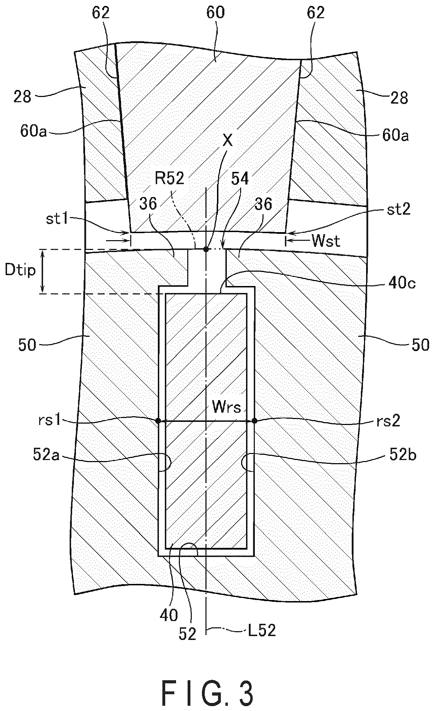

FIG. 2 is a cross-sectional view schematically showing a part of each of the stator 14 and the rotor 16, taken along line A-A in FIG. 1, and FIG. 3 is a partially enlarged cross-sectional view of what is shown in FIG. 2.

As shown in FIGS. 2 and 3, the rotor slots 52 each open to the outer circumference of the rotor iron core 32 via a respective opening portion 54. The opening portions 54 each extend over an entire axial length of the rotor iron core 32. A circumferential width of the rotor slots 52 is set to be greater than a circumferential width of the opening portions 54.

Around the outer circumference of each rotor slot 52, a tip portion (rotor slot tip) 36 is provided to prevent the conductor bar 40 from falling out. The tip portion 36 is a portion which protrudes in the circumferential direction over a predetermined length in the radial direction from the circumferential end of the rotor iron core 32, or plainly, the rotor teeth 50, and it narrows the outer circumference of the rotor slot 52 along the circumferential direction. Viewed another way, the tip portion 36 is a portion which protrudes in the circumferential direction along the outer circumference of the rotor iron core 32 (rotor teeth 50) and radially lap the respective conductor bar 40 inserted to the rotor slot 52. The outer circumference of the rotor slot 52 is narrowed from both circumferential sides by a pair of tip portions 36 that respectively protrude in opposite directions along the circumferential direction, and the outer circumferential portions (the portion facing outward) of the rotor slot 52 narrowed by these tip portions 36 are formed as an opening 54. The tip portions 36 prevent the respective conductor bar 40 from falling out of the respective rotor slot 52.

In this embodiment, the number (Nrs) of rotor slots 52 is set to be less than or equal to the number (Nss) of stator slots 62 (Nss ≥ Nrs). FIG. 2 shows a case as an example where the number (Nrs) of rotor slots 52 is less than the number (Nss) of stator slots 62 (Nss > Nrs). In this case, for example, the number Nss of stator slots 62 is 36 and the number Nrs of rotor slots 52 is 26. Note here that as long as the relationship Nss ≥ Nrs(, which will be referred to as Formula 1, hereinafter) is satisfied, the combination between the number Nss of stator slots 62 and the number Nrs of rotor slots 52 is arbitrary.

In this embodiment, the stator teeth 60, the rotor teeth 50 and the rotor slots 52 have a predetermined relationship with respect to their width dimensions relative to their circumferential directions, respectively. Each of these width dimensions is defined as follows.

As the width dimension of the stator teeth 60, the minimum width (Wst) is adopted. The minimum width Wst is the shortest distance between any two points of two edge portions 60a and 60b which define the circumferential side surfaces of the stator teeth 60, in other words, the two edge portions 60a and 60b which define the side surface along the direction perpendicular to the radial direction. In the example shown in FIG. 2, the distance connecting the two points st1 and st2 shown in FIG. 3(, which will be referred to as "reference points" hereinafter) corresponds to the minimum width Wst. The reference points st1 and st2 are points located closest to an inner side of the stator teeth 60 in the radial direction. In other words, the reference points st1 and st2 are points located at both circumferential ends of the projecting end portions of the stator teeth 60, projecting toward the central axis C1.

As the width dimension of the rotor teeth 50, an average width (Wrt) is adopted. The average width Wrt is an average distance between two edge portions 50a and 50b, which defines the circumferential side surfaces of the rotor teeth 50, in other words, an average of distances obtained by connecting any one point and a respective corresponding point on two edge portions 50a and 50b along the circumferential direction (at the same diametrical positions), which defines a side surface along the direction perpendicular to the radial direction. The circumferential side surface defined by the two edges 50a and 50b is interposed between the conductor bars 40 inserted to the respective rotor slots 52. In the example shown in FIG. 2, the distance connecting the two points rt1 and rt2 shown in the figure(, which will be referred to as reference points, hereafter) corresponds to the average width Wrt. The reference points rt1 and rt2 are each located approximately at a middle point in the radial direction of the rotor teeth 50. In this case, the cross-sectional shape of each of the rotor teeth 50 is an approximately trapezoidal shape having a width dimension becoming narrower towards the inner side along the radial direction and wider towards the outer side thereof.

As the width dimension of the rotor slots 52, an average width (Wrs) is adopted. The average width Wrs is an average distance between two edge portions 52a and 52b, which defines the circumferential side surfaces of the rotor slots 52, in other words, an average of distances obtained by connecting any one point and a respective corresponding point on two edge portions 52a and 52b along the circumferential direction (at the same diametrical positions), which defines a side surface along the direction perpendicular to the radial direction. In the example shown in FIG. 2, the distance between two points rs1 and rs2 shown in FIG. 3(, which will be referred to as "reference points", hereinafter) corresponds to the average width Wrs. The reference points rs1 and rs2 are each located approximately at a middle point along in the radial direction of the rotor slots 52. Note that in the example shown in FIG. 2, the distances connecting any one point and a respective corresponding point on the same circumference (the same diameter positions) of the two edge portions 52a and 52b are approximately constant at all positions (points) of the two edge portions 52a and 52b. In other words, in this case, the cross-sectional shape of the rotor slots 52 is substantially rectangular.

As to the minimum width Wst of the stator teeth 60 thus defined above, a total sum (total width) of the minimum widths Wst of all the stator teeth 60 is expressed as Tst. Further, as to the average width Wrt of the rotor teeth 50, a total sum (total width) of the average widths Wrt of all the rotor teeth 50 is expressed as Trt. In this case, the stator teeth 60 and the rotor teeth 50 are configured to satisfy the relationship: Tst ≤ Trt(, which will be referred to as Formula 2, hereinafter). That is, the total width Tst of the minimum widths Wst of all the stator teeth 60 is set to less than or equal to the total width Trt of the average width Wrt of all the rotor teeth 50. FIG. 2 shows an example case of the configuration form of the stator teeth 60 and the rotor teeth 50 where the total width Tst is smaller than the total width Trt (Tst < Trt).

The minimum width Wst of the stator teeth 60 and the average width Wrt of the rotor teeth 50 have a predetermined relationship with the radial length of the tip portion 36(, which will be referred to as depth Dtip, hereinafter). The depth Dtip of the tip portion 36 is the minimum distance to the end surface of the conductor bar 40 from an imaginary intersection point X between the centerline of the rotor slot 52 (an alternate long and short dash line L52 shown in FIG. 3) and the arc of the outer circumference of the rotor slot 52 (an alternate long and two short dashes line R52 shown in FIG. 3). The centerline L52 of the rotor slot 52 is a straight line orthogonal to the central axis C1 and passing through the point that bisects the circumferential width of the rotor slot 52 (for example, the average width Wrs), that is, the midpoint of the straight line connecting the reference points rs1 and rs2. The end surface 40c of the conductor bar 40 is the outer radial surface of the conductor bar 40.

When the depth Dtip of the tip portion 36 is defined in this manner, the tip portion 36, the stator teeth 60 and the rotor teeth 50 are configured to have the relationship: (Wst - Wrs) + 2 × Dtip ≥ Wst(, which will be referred to as Formula 3, hereinafter). In other words, the value obtained by adding twice the dimension of the depth Dtip of the tip portion 36 to the difference between the minimum width Wst of the stator teeth 60 and the average width Wrt of the rotor teeth 50 is greater than or equal to the minimum width Wst of the stator teeth 60.

Thus, according to this embodiment, the stator teeth 60, the rotor teeth 50, the rotor slots 52 and the tip portions 36 are configured to satisfy the above formulas 1, 2 and 3. With this configuration, it is possible to prevent the harmonic components of the spatial magnetic flux flowing from the stator 14 to the rotor 16 from linking with the conductor bar 40. In this manner, the loss (harmonic secondary copper loss) of current induced in the conductor bar, conventionally caused by the harmonic magnetic flux can be suppressed, and the induced current can be efficiently generated in the conductor bar 40 to contribute to the torque. Therefore, it is possible to suppress the torque loss of the rotary electric machine 10.

Note that as long as the stator teeth 60, the rotor teeth 50, the rotor slots 52 and the tip portion 36 are configured to satisfy the above-described relationships of Formulas 1, 2 and 3, the forms of these elements are not limited to those shown in FIGS. 1 to 3. The followings are descriptions of embodiments which differ from the forms shown in FIGS. 1 to 3. In these embodiments, the basic configuration of the rotary electric machine 10 is similar to that of the present embodiment shown in FIG. 1. Therefore, in the following, the differences from the present embodiment will be explained, and the components equivalent to those of the rotary electric machine 10 of the present embodiment will be marked with the same symbols in the drawings and the explanations thereof will be omitted or provided in a simplified manner.

### (Second Embodiment)

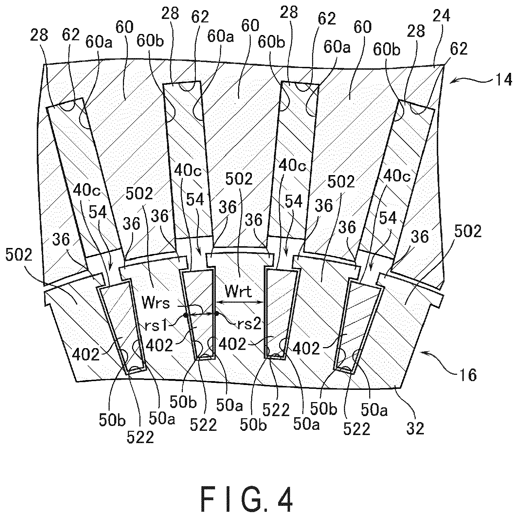

FIG. 4 is a cross-sectional view schematically showing a part of each of a stator 14 and a rotor 16 of the rotary electric machine according to the second embodiment, taken along line A-A in FIG. 1. Unlike the first embodiment (Nss > Nrs), FIG. 4 shows an example case where the number Nrs of the rotor slots 522 and the number Nss of the stator slots 62 coincide with each other (Nss = Nrs). The shapes of the stator teeth 60 and the stator slots 62 are similar to those of the first embodiment. In this case, for example, the number Nss of the stator slots 62 is thirty six, the number Nrs of the rotor slots 522 is thirty six.

The cross-sectional shape of each of the rotor slots 522 is approximately a trapezoidal, with the circumferential width dimension becoming narrower toward the inner side in the radial direction and wider toward the outer side in the circumferential direction. The cross-sectional shape of the conductor bars 402 each inserted to the respective rotor slot 522 corresponds to the cross-sectional shape of the rotor slots 522, and is approximately trapezoidal similar to and slightly smaller than the cross-sectional shape. The average width Wrs of the rotor slots 522 corresponds to the distance between two points rs1 and rs2 located approximately at a middle point in the radial direction of the rotor slots 522.

In contrast, the cross-sectional shape of the rotor teeth 502 is rectangular. In other words, the circumferential width dimension of the rotor teeth 502 is constant in the radial direction. The total width Tst of the minimum widths Wst of all the stator teeth 60 coincides with the total width Trt of the average widths Wrt of all the rotor teeth 502.

As described above, in this embodiment, the rotor teeth 502 have a constant circumferential width dimension in the radial direction, and therefore it is possible to avoid the magnetic resistance in the rotor teeth 502 from differing between the inner side and the outer side along the radial direction. As a result, the magnetic resistance in the rotor teeth 502 can be reduced and further, the magnetic flux density can be made uniform. Thus, induction current can be efficiently generated in the conductor bar 402, and the generated induction current can efficiently contribute to the torque of the rotating shaft 30. Therefore, it possible to suppress the torque loss of the rotary electric machine 10.

Note that the number Nrs of the rotor slots is made coincide with the number Nss of the stator slots, and, for example, the cross-sectional shapes of the rotor slots and the conductor bars may be rectangular and the cross-sectional shape of the rotor teeth may be trapezoidal, respectively.

### (Third Embodiment)

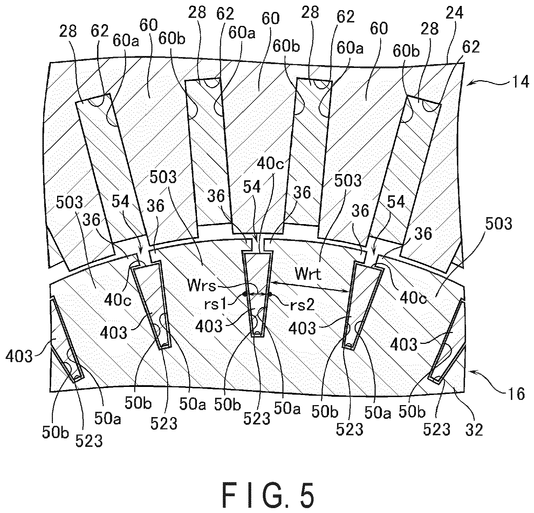

FIG. 5 is a cross-sectional view schematically showing a part of each of a stator 14 and a rotor 16 of the rotary electric machine according to the third embodiment, taken along line A-A in FIG. 1. As in the case of the first embodiment (Nss > Nrs), FIG. 5 shows an example case where the number Nrs of the rotor slots 523 is less than the number Nss of the stator slots 62 (Nss > Nrs). The shapes of the stator teeth 60 and the stator slots 62 are similar to those of the first embodiment. In this case, for example, the number Nss of the stator slots 62 is thirty six, the number Nrs of the rotor slots 523 is twenty six.

On the other hand, the shapes of rotor teeth 503, rotor slots 523 and conductor bars 403 are different from those of the rotor teeth 50, the rotor slots 52 and the conductor bars 40 of the first embodiment.

The cross-sectional shape of the rotor teeth 503 is rectangular. Therefore, the circumferential width dimension of the rotor teeth 503 is constant in the radial direction. On the other hand, the total width Tst of the minimum widths Wst of all the stator teeth 60 is less than the total width Trt of the average widths Wrt of all the rotor teeth 50 (Tst < Trt).

In contrast, the cross-sectional shape of the rotor slots 523 is approximately trapezoidal, with the circumferential width dimension becoming narrower toward the inner side in the radial direction and wider toward the outer side in the circumferential direction. The cross-sectional shape of the conductor bars 403 each inserted to the respective rotor slot 523 corresponds to the cross-sectional shape of the rotor slots 523, and is approximately trapezoidal similar to and slightly smaller than the cross-sectional shape. The average width Wrs of the rotor slots 523 corresponds to the distance between two points rs1 and rs2 located approximately at a middle point in the radial direction of the rotor slots 523.

As described above, this embodiment corresponds to a modification of the second embodiment, where the number Nrs of the rotor slots 523 is less than the number Nss of the stator slots 62 (Nss > Nrs).

According to this embodiment, as in the second embodiment, the rotor teeth 503 have a constant circumferential width dimension in the radial direction, and therefore it is possible to avoid the magnetic resistance in the rotor teeth 503 from differing between the inner side and the outer side along the radial direction. As a result, the magnetic resistance in the rotor teeth 503 can be reduced and further, the magnetic flux density can be made uniform. Further, as compared to the rotor teeth 502 of the second embodiment, the average width Wrt of the rotor teeth 503 is greater, and therefore, the magnetic flux density at the rotor teeth 503 is less, and the effect of lowering the magnetic resistance can be further enhanced.

### (Fourth Embodiment)

In the first to third embodiments described above, the cross-sectional shapes of the rotor slots 52, 522 and 523 and those of the conductor bars 40, 402 and 403 are quadrilateral (quadrangular), but they may be configured to have a polygonal cross-sectional shape more than quadrangular.

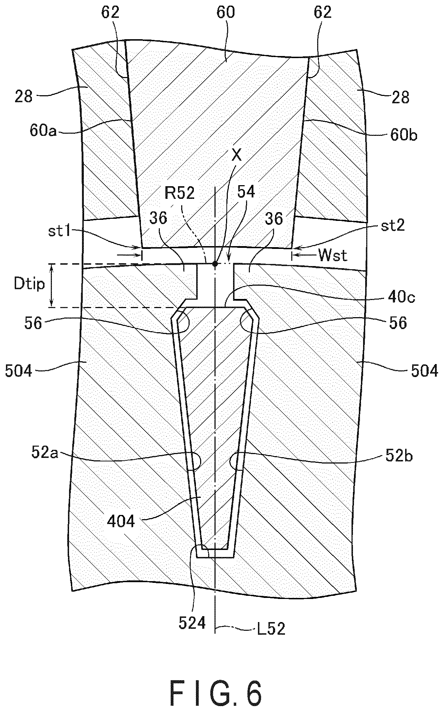

FIG. 6 is a partially enlarged cross-sectional view showing a stator 14 and a rotor 16 of the fourth embodiment, taken along a position corresponding to line A-A in FIG. 1. As shown in FIG. 6, the cross-sectional shape of each of the rotor slots 524 is a hexagonal. In the example shown in FIG. 6, rotor slots 524 are each configured to have approximately a hexagonal cross-section obtained by a trapezoidal shape with the circumferential width dimension becoming narrower toward the inner side in the radial direction and wider toward the outer side in the circumferential direction, in which inner corners thereof being chamfered (for example, C-chamfered). In other words, the rotor teeth 504 are configured so that the rotor slots 524 with such a hexagonal cross-sectional shape are arranged along the circumferential direction. The rotor teeth 504 are continuous respectively with tip portions 36 in the state that the rotor slots 524 are chamfered in this manner. The cross-sectional shape of the conductor bars 404 inserted to the respective rotor slots 524 corresponds to the cross-sectional shape of the rotor slots 524 and is hexagonal similar to and slightly smaller than the cross-sectional shape.

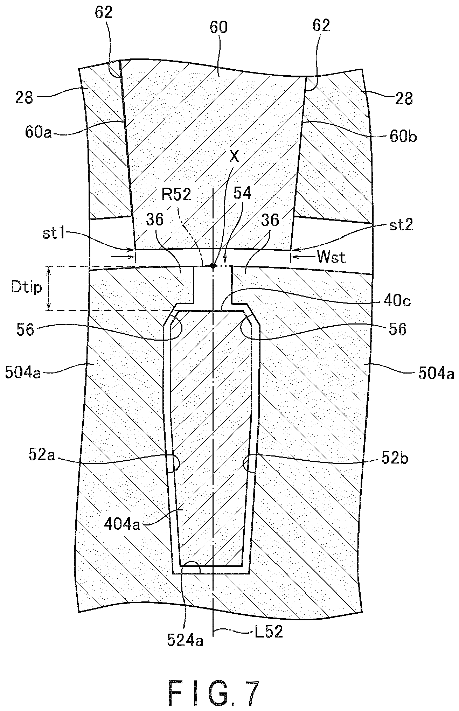

FIG. 7 is a partially enlarged cross-sectional view showing a stator 14 and a rotor 16 according to a modified example of the fourth embodiment, taken along a position corresponding to line A-A in FIG. 1. As shown in FIG. 7, the cross-sectional shape of each of the rotor slots 524a is an octagonal. In the example shown in FIG. 7, rotor slots 524a are each configured to have approximately an octagonal cross-section obtained by chamfering (for example, C-chamfering) inner corners of an approximately rectangle and bending two circumferentially opposing surfaces in the middle so that they approach each other. In other words, the rotor teeth 504a are configured so that the rotor slots 524a with such an octagonal cross-sectional shape are arranged along the circumferential direction. The rotor teeth 504a are continuous respectively with tip portions 36 in the state that the rotor slots 524a are chamfered in this manner. The cross-sectional shape of conductor bars 404a inserted to the respective rotor slots 524a corresponds to the cross-sectional shape of the rotor slots 524a and is octagonal similar to and slightly smaller than the cross-sectional shape.

As described above, in this embodiment, the rotor teeth 504 and 504a are continuous with the tip portions 36 respectively in the state that the rotor slots 524 and 524a are chamfered. In other words, continuous portions 56 between the rotor teeth 504 and 504a and the respective tip portions 36 are chamfered in the rotor slots 524 and 524a. With this configuration, as compared to the first to third embodiments (FIGS. 3, 4 and 5), the continuous portions 56 of the rotor teeth 504 and 504a with the tip portions 36 become wider. Therefore, the magnetic flux density in the rotor teeth 504 and 504a in the vicinity of the respective tip portion 36 becomes lower, and the magnetic resistance can be reduced. Thus, it is possible to suppress the harmonic components of the spatial magnetic flux flowing from the stator 14 to the rotor 16 from linking with the conductor bars 404 and 404a. Therefore, an induced current can be efficiently generated in conductor bar 402 to contribute to the torque, and the torque loss of the rotary electric machine 10 can be suppressed.

While certain embodiments (including modified examples) have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

For example, in the first to fourth embodiments, the rotor teeth 50, 502, 503 503, 504 and 504a, the rotor slots 52, 522, 523, 524 and 524a and the conductor bars 40, 402, 403, 404 and 404a have shapes different from each other, respectively. In place of or in addition to this, the shapes of the stator teeth 60 and the stator slots 62 can be differentiated from each other into such forms which satisfy the relationships expressed by Formulas 1, 2 and 3.

### Reference Signs List

10 ... Rotary electric machine, 12 ... Case, 14 ... Stator, 16 ... Rotor, 18 ... Frame, 24 ... Stator iron core, 26a, 26b ... Iron core holder, 28 ... Stator coil, 30 ... Rotating shaft, 32 ... Rotor iron core, 34a, 34b ... Iron core holder, 36 ... Tip portion, 40, 402, 403, 404, 404a ... Conductor bar (Rotor bar), 40c ... End surface (Outer surface), 50, 502, 503, 504, 504a ... Rotor teeth, 50a, 50b ... Edge portion, 52, 522, 523, 523, 524, 524a ... Rotor slots, 52a, 52b ... Edge portion, 54 ... Opening, 56 ... Continuous portion, 60 ... Stator teeth, 60a, 60b ... Edge portion, 62 ... Stator slot, C1 ... Central axis, Dtip ... Depth of tip portion, L52 ... Centerline of rotor slot, R52 ... Outer arc of rotor slot, X ... Intersection, rs1, rs2 ... Reference point of rotor slot, rt1, rt2 ... Reference point of rotor teeth, st1, st2 ... Reference point of stator teeth, Trt ... Total average width of all rotor teeth, Tst ... Total width of average width of all stator teeth, Wrs ... Average width of rotor slots, Wrt ... Average width of rotor teeth, Wst ... Minimum width of stator teeth.

## Claims

1. A rotary electric machine comprising:
a stator including a plurality of stator slots opened in an inner circumference surface and a plurality of stator teeth each formed between adjacent ones of the stator slots, around which a coil is wound; and
a rotor provided freely rotatable about a central axis, and including a plurality of rotor slots to which conductive rotor bars are inserted, a plurality of rotor teeth formed between respective adjacent ones of the rotor slots in a circumferential direction along an inner circumferential surface of the stator, and rotator slot tips projecting in the circumferential direction over a predetermined length in a radial direction from end portions of the rotor teeth along the circumferential direction,
wherein
when the number of stator slots is represented by Nss and the number of rotor slots is represented by Nrs,
a relationship of Nss ≥ Nrs is satisfied,
and
when a minimum width of the stator teeth in the circumferential direction is represented by Wst, an average width of the rotor teeth in the circumferential direction, interposed between the respective rotor bars is represented by Wrt, an average width of the rotor slots in the circumferential direction is represented by Wrs, a total sum of the minimum widths Wst of all the stator teeth is represented by Tst, a total sum of the average widths Wrt of all the rotor teeth is represented by Trt and a length of the rotor slot tips in the radial direction is represented by Dtip,
relationships of Tst ≤ Trt and
(Wst - Wrs) + 2 × Dtip ≥ Wst are satisfied.

2. The rotary electric machine according to claim 1, wherein
the rotor includes opening portions opening the rotor slots respectively in the radial direction in an outer circumference thereof, and
the rotor slot tips each narrow the outer circumference of the respective rotor slot in the circumferential direction to form the respective opening portion.

3. The rotary electric machine according to claim 2, wherein
the rotor slot tips lap in the radial direction with the rotor bars respectively inserted to the rotor slots.

4. The rotary electric machine according to claim 2, wherein
the rotor teeth and the rotor slot tips are continuous respectively each other in a chamfered form.

5. The rotary machine according to any one of claims 1 to 4, wherein
a length Dtip of each of the rotor slot tips in the radial direction is a minimum distance to an outer surface of the conductor bar inserted in the respective rotor slot from an imaginary intersection point between a straight line orthogonal to the central axis and passing through a point bisecting the width of the rotor slot in the circumferential direction and an arc of an outer circumference of the rotor slot.

6. The rotary electric machine according to claim 5, wherein
the number Nss of the stator slots is thirty six.
